# EUROPEAN PATENT APPLICATION

(11) **EP 1 323 948 A1**
(43) Date of publication of application: **02.07.2003**
(21) Application number: 02258744.8
(22) Date of filing: 18.12.2002
(51) Int. Cl.: F16H 7/08

(54) **Hydraulic tensioner**

(30) Priority: 27.12.2001 JP 2001395977
(71) Applicant: BorgWarner Morse TEC Japan K.K., Nabari, Mie 518-0495 (JP)
(72) Inventor: Seungpyo, S., BorgWarner Morse TEC Japan K.K., Mie 518-0495 (JP); Nakada, S., BorgWarner Morse TEC Japan K.K., Mie 518-0495 (JP)
(74) Representative: Lerwill, John

(57) **Abstract**

A hydraulic tensioner that decreases the number of components, secures an adequate backlash, and prevents backward movement of a plunger. The hydraulic tensioner includes a hollow plunger having rack teeth formed on a portion of an outer circumferential surface, slidably received in a bore of the housing, where the plunger has an inner space to form a fluid chamber with the bore. A roller housing portion, having an inclined surface, located in the housing, receives a wedge-shaped roller having a ratchet portion adapted to engage with the rack teeth of the plunger and a second side surface. The wedge-shaped roller being slidable along the inclined surface of the roller housing portion in a direction crossing an axial centerline of the plunger. The hydraulic tensioner further includes a first spring biasing the plunger in a protruding direction, and a second spring biasing the roller such that the roller moves along the inclined roller surface of the roller housing portion. A "wedge-effect" prevents the plunger from moving backwards.

## Description

### BACKGROUND OF THE INVENTION

### FIELD OF THE INVENTION

The invention pertains to the field of hydraulic tensioners for imparting an appropriate tension to a chain, belt, or the like. More particularly, the invention pertains to a hydraulic tensioner having a ratchet mechanism, including a roller, to prevent a plunger's retraction at the time of a decreased hydraulic pressure.

### DESCRIPTION OF RELATED ART

A hydraulic tensioner generally includes a housing, a hollow plunger that is slidably fitted into a bore formed in the housing biased in a protruding direction by a spring, and a fluid chamber defined by the bore of the housing and the plunger. During operation, a force of a chain or belt imparted on a distal end of the plunger balances an elastic force of the spring and the hydraulic force in the chamber.

When a force is exerted by a chain on the distal end of the plunger, an inadequate amount of hydraulic pressure is present in the chamber. This force is exerted at the time of engine start. As a result, the plunger is easily forced to retract into the housing, causing noise or oscillation. In order to prevent such a retraction of the plunger, various kinds of hydraulic tensioners with ratchet mechanism have been proposed, such as Japanese Publication Nos. 2000-136856 and 2001-304360.

The hydraulic tensioner shown in Japanese Publication No.2000-1368056 includes a rack supported translatably in a longitudinal hole formed in a housing, a ratchet fitted slidably in a lateral cavity formed in the housing, a rack which is engaged by the ratchet, and a spring fitted in the cavity, which biases the ratchet in an engaging direction with the rack. The ratchet moves in a direction perpendicular to the movement of the rack at the time of protrusion of the plunger. One problem associated with this tensioner is that the rack is discrete from the plunger, such that the tensioner has increased number of components. Additionally, in the case of the chain having relatively long center distance, there exists a demand for increasing the backlash of the ratchet mechanism in some degree, but the above-mentioned tensioner has a drawback in that the backlash of the ratchet mechanism cannot be enlarged more than the backlash present between the rack and the ratchet.

Japanese Publication No. 2001-304360 shows a hydraulic tensioner that includes a rack groove formed on the circumference of a piston. A claw member is adapted to engage the rack groove and slidably fits in a lateral hole. The lateral hole extends in a direction that crosses the axial centerline of the piston in the housing, via a predetermined clearance with an inside wall surface of the lateral hole. The tensioner also includes a spring that fits in the lateral hole that biases the claw member in the engagement direction with the rack. The claw member moves in the direction diagonal to the movement of the rack teeth at the time of protrusion of the piston. However, the amount of movement of the claw member does not fully contribute to the increase of the backlash. In this tensioner, it may be possible to enlarge the backlash of the ratchet mechanism more than the backlash present between the rack groove and the claw member by providing a predetermined clearance between the claw member and the inside wall surface of the lateral hole. However, increasing the backlash may cause chattering due to too great a clearance between the claw member and the lateral hole. Thus increasing the amount of clearance does not increase the backlash of the ratchet mechanism an adequate amount.

The present invention provides a hydraulic tensioner with a ratchet mechanism, which reduces the number of components, ensures an adequate backlash, and securely prevents a plunger's retraction.

### SUMMARY OF THE INVENTION

A hydraulic tensioner according to one aspect of the present invention includes a housing having a central bore that opens at one end thereof, a hollow plunger slidably received in the bore of the housing, the plunger having an inside space that defines a fluid chamber with the bore and rack teeth that are formed at least at a portion of the outer circumference of the plunger. The rack teeth formed on the outer circumference of the plunger, eliminating the need to provide a separate rack member and plunger, thereby reducing the number of components of the tensioner.

The tensioner further includes a first biasing member that biases the plunger in a protruding direction, a roller adapted to permit travel of the plunger in the protruding direction but is prevented from traveling in a backward direction by the development of a "wedge-effect" at the time of retraction of the plunger, and a second biasing member that biases the roller in a direction of engagement with the rack teeth. The roller develops a "wedge-effect" between an inclined surface and the rack teeth of the plunger at the time of the backward movement of the plunger, thus securely preventing the plunger from retracting. The roller is slidable along an inclined surface extending in a direction intersecting an axial centerline of the plunger, which is engageable with the rack teeth of the plunger.

The housing has a supporting block formed with a roller housing portion. The roller housing portion has an inclined slide surface that the roller slidably contacts, and a second biasing member that biases the roller in such a way that the roller moves along the inclined surface. The roller housing portion has a stop surface adapted to contact the roller and block the travel of the roller in a backward direction at the time of retraction of the plunger. Thereby, the movement of the roller, and the retraction of the plunger may be securely prevented. The roller housing portion also has a facing wall oppositely disposed to the roller, with one end of the second biasing member contacting the facing wall and the other end contacting the roller. During movement of the roller, the roller is guided by the inclined surface formed in the roller housing portion of the supporting block, which is under the action of the force of the second biasing member, thus movement of the roller is smooth.

The second biasing member may be a coil spring where the axial centerline is disposed parallel to the inclined surface formed in the roller housing portion. In this case, the biasing force of the coil spring may be transmitted to the roller without any loss of contact between the roller and the inclined surface of the roller housing portion, thereby, maintaining the inclined surface of the supporting block. The roller and the second biasing member are integrated and housed inside the supporting block, thus facilitating assembly of the tensioner.

When the plunger travels in the protruding direction during operation of the tensioner, the roller slides along the inclined surface through engagement between the rack teeth of the plunger and the roller, thereby increasing the whole backlash correspondingly to the amount of the sliding movement, which allows an adequate amount of backlash to be secured. The plunger is prevented from retracting by a "wedge-effect," which is present at the time of backward movement of the plunger by a wedge-shaped roller.

The housing further contains a first through hole adapted to insert a disengaging pin thereinto between the roller and the stop surface of the roller housing portion, in order to disengage the engagement of the roller with the rack teeth of the plunger. Also, the housing has a second through hole adapted to insert a retaining pin for engagement with the rack teeth of the plunger, used to retain the plunger in a retracted state. In this case, inserting the disengaging pin into the first through hole may easily disengage engagement of the roller with the rack teeth of the plunger. By this disengagement, a worker can easily push the plunger into the housing before the tensioner is transported. Then, by inserting the retaining pin into the second through hole, the retracted condition of the plunger may be maintained with ease, thereby facilitating assembly of the tensioner into a chain. Additionally, after assembly into the chain, the tensioner is placed in an operatable state by removing the retaining pin.

The disengaging pin and the retaining pin are preferably the same pin with a tapered distal end. The insertion of the pin into a clearance between the roller and the stop surface of the roller housing portion, and into the rack teeth of the plunger from the second through hole may be conducted with ease. The use of only one pin as a disengaging pin and a retaining pin decreases the number of components.

A check valve may be provided at a bottom portion of the central bore of the housing to permit fluid flow into the chamber but to block reverse flow of fluid, thereby, securely preventing the retraction of the plunger.

### BRIEF DESCRIPTION OF THE DRAWING

Fig. 1 shows a longitudinal sectional view of a hydraulic tensioner according to an embodiment of the present invention, showing the state of the plunger's maximum retraction.
Fig. 2 shows a longitudinal sectional view of a hydraulic tensioner according to an embodiment of the present invention, showing the state of the plunger's maximum protrusion.
Fig. 3 shows a lateral sectional view of a plunger at the engagement portion of the ratchet mechanism with the roller in the hydraulic tensioner of Figure 1.
Fig. 4 shows a schematic illustrating a ratchet mechanism and a disengaging pin.
Fig. 5 shows a schematic illustrating a ratchet mechanism and a retaining pin.
Fig. 6 shows a schematic illustrating an operation of the ratchet mechanism at the time of protrusion of the plunger.
Fig. 7 shows a schematic illustrating an operation of the ratchet mechanism at the time of protrusion of the plunger.
Fig. 8 shows a schematic illustrating an operation of the ratchet mechanism at the time of protrusion of the plunger.
Fig. 9 shows a schematic illustrating an operation of the ratchet mechanism at the time of protrusion of the plunger.
Fig. 10 shows a schematic illustrating an operation of the ratchet mechanism at the time of restriction of the plunger.
Fig. 11 shows a schematic illustrating an operation of the ratchet mechanism at the time of retraction of the plunger.

### DETAILED DESCRIPTION OF THE INVENTION

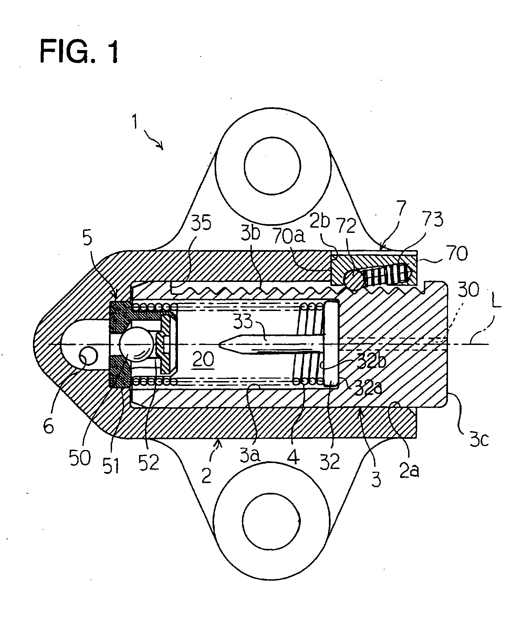

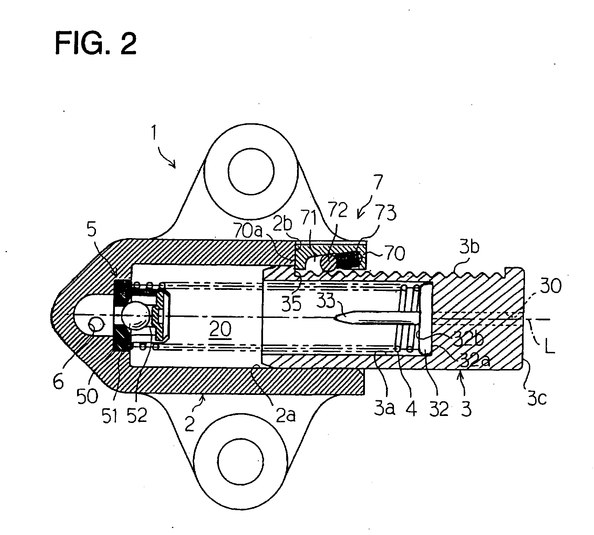

As shown in Figures 1 and 2, a hydraulic tensioner 1 includes a housing 2, a hollow plunger 3 fitted slidably in a bore 2a formed in the housing 2, and a spring 4 as a first biasing member that biases the hollow plunger 3 in a protruding direction from the bore 2.

In the housing 2, a fluid chamber 20 is defined by an inner space 3a formed in the plunger 3 and the inside wall surface of the bore 2a. A check valve 5 is provided at a bottom portion of the bore 2a in the housing 2 to permit flow of fluid into the chamber 20 but to block fluid flow in a reverse direction. The check valve 5 is comprised of a ball 50, a ball seat 51 contacted by the ball 50, and a ball spring 52 biasing the ball 50 toward the ball seat 51. Any other suitable structure may be employed to form a check valve. The housing 2 also has a fluid passage 6 to connect the chamber 20 with an outer source of pressurized fluid (not shown). Rack teeth 3b are formed on a portion of an outer circumference of the plunger 3. A ratchet mechanism 7 is provided at an open portion of the bore 2a of the housing 2 to prevent retraction of the plunger 3.

The ratchet mechanism 7 is comprised of a supporting block 70 that is disposed in a notch portion 2b formed at an open portion of the bore 2a of the housing 2, a roller 72 disposed in a roller housing portion 71 concavely formed in the supporting block 70 that is engageable with the rack teeth 3b of the plunger 3, and a spring 73 as a second biasing member that biases the roller 72 in such a way that the roller 72 engages with the rack teeth 3b. The supporting block 70 has a screw hole (not shown) to insert a bolt (not shown) thereinto, and is fixed in the notch portion 2b of the housing 2 via the bolt.

In the inner space 3a of the plunger 3, a vent disk 32 is provided. The vent disk 32 discharges air trapped in the chamber outside the tensioner and controls leakage of fluid from the fluid chamber. The first principal surface 32a of the vent disk 32 is formed with a tortuous groove (not shown) extending spirally from the center of the disk to the outside circumference. The inside of the plunger 3 contacts the first principal surface 32a of the vent disk 32. An axially extending through hole 30 is formed that is adapted to open in the inner space 3a, which connects the tortuous groove of the first principal surface 32a with the inside of the plunger.

Air trapped in the fluid chamber 20 enters the tortuous path on the outer circumference side of the first principal surface 32a of the vent disk 32, along with fluid, which enters through the clearance between the outer perimetral surface of the vent disk 32 and the inner perimetral surface of the inner space 3a, and travels toward the center of the first principal surface 32a through the tortuous path, and discharges to the outside of the tensioner through the through hole 30 of the plunger 3. On a second principal surface 32b disposed opposite the first principal surface 32a of the vent disk 32 is a rod portion 33 that extends axially from the center of the second principal surface 32b. The rod portion 33 extends into the fluid chamber 20 to decrease the volume of the fluid chamber 20. One end of the spring 4 presses against the second principal surface 32b of the vent disk 32. That is, the vent disk 32 is sandwiched between the end of the spring 4 and the bottom surface of the inner space 3a.

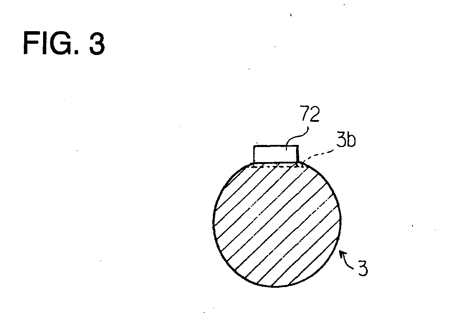

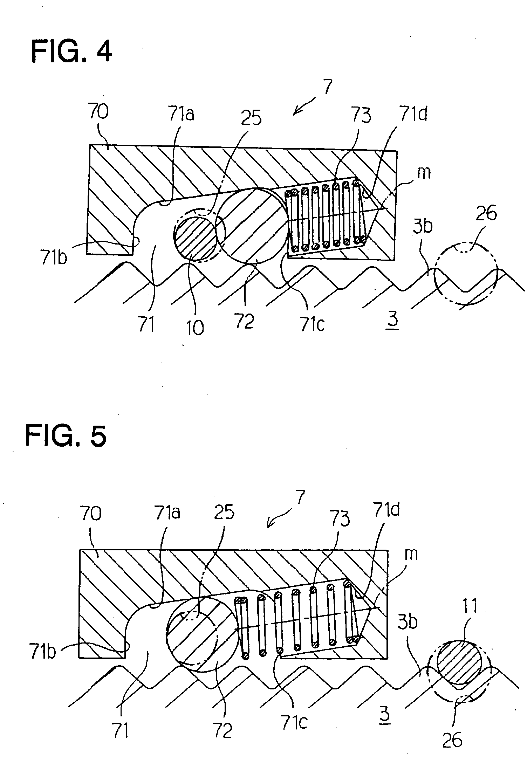

The roller 72, as shown in Figure 3, is a cylindrical member extending in a direction perpendicular to an axial centerline of the plunger 3, where its cylindrical outer surface is engageable with the rack teeth 3b of the plunger 3. As shown in Figures 4 and 5, the roller housing portion 71 has an inclined surface 71a that the inclined surface 72b of the roller 72 slidably contacts. The inclined surface 71a extends in a direction intersecting the axial centerline L of the plunger 3. The distance between the inclined surface 71a and the axial center line L of the plunger 3 gradually decreases as one moves toward the rearward direction of the plunger 3 (i.e. lefthand direction of Figures 4, 5). The angle between the inclined surface 71a and the axial centerline L of the plunger 3 is preferably 45 degrees or less. In this embodiment, the angle is predetermined to be about 10 degrees to ensure both secure engagement and an adequate backlash in the ratchet mechanism 7.

The roller housing portion 71 also contains a stop surface 71b disposed opposite the roller 72 and adapted to prevent the movement of the roller 72 by contacting the roller 72 at the time of retraction of the plunger 3. Also, the roller housing portion 71 has a wall surface 71c contraposed to the roller 72.

A coil spring is employed as spring 73. One end of the spring 73 engages with the roller 72, and the other end thereof engages with a concave portion 71d formed on the wall surface 71c. An axial center line m of the spring 73 is preferably disposed parallel to the inclined surface 71a of the roller housing portion 71 so that contact of the roller 72 with the inclined surface 71a can be maintained and the force of the spring 73 may be transmitted to the roller 72 without any loss.

The ratchet mechanism 7 permits the travel of the plunger 3 in the protruding direction (i.e. righthand direction of Figures 1, 2), and prevents the retraction of the plunger 3 by developing a roller's "wedge-effect" between the inclined surface 71a and the outer circumference of the plunger 3 at the time of retraction of the plunger 3. Also, by integrating the roller 72 and the spring 73 into the supporting block 70, the assembly of the tensioner may be conducted with ease.

The housing 2 has a first and second through hole 25, 26 formed therein to penetrate the outer circumference of the housing 2 in a direction perpendicular to the axial direction (i.e. a direction perpendicular to the pages of Figures 1, 2), shown in Figures 4, 5. The first through hole 25 is disposed on the rear end side of the roller housing portion 71 and the second through hole 26 is disposed on the front of the roller housing portion 71.

The first through hole 25, shown in Figure 4, is a hole adapted to insert a disengaging pin 10 to disengage the engagement between the roller 72 and the rack teeth 3b of the plunger 3. The second through hole 26, shown in Figure 5, is a hole adapted to insert a retaining pin 11 to maintain the plunger 3 in a retracted state. The disengaging pin 10 and retaining pin 11 both have tapered distal ends. In an alternative embodiment, a single, common pin may be provided for the disengaging pin 10 and the retaining pin 11, thus reducing the number of components of the tensioner 1.

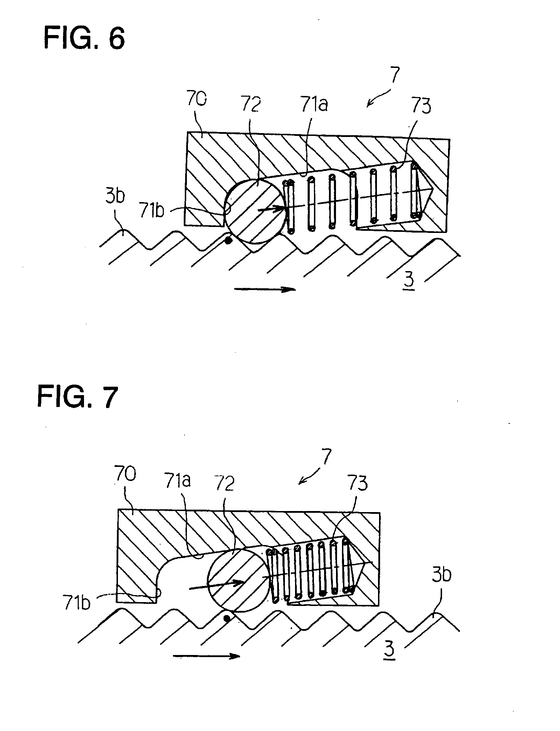

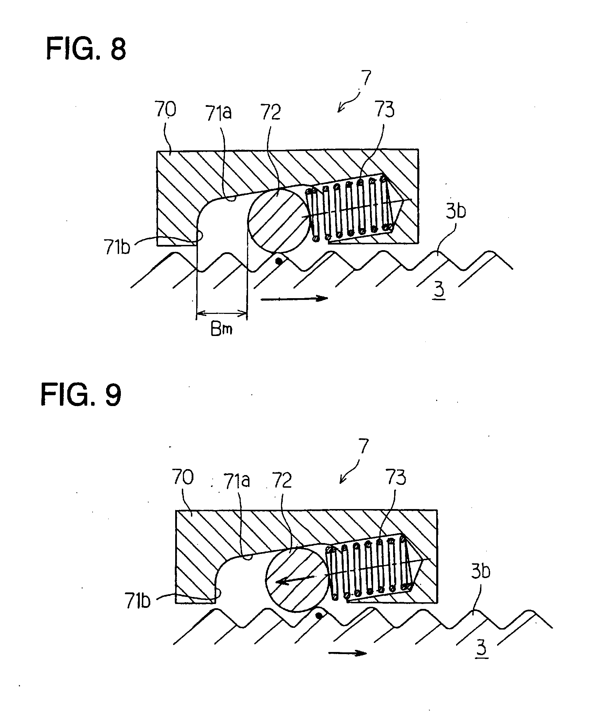

When the engine starts, engine oil is supplied to the fluid chamber 20 of the housing 2 through the check valve 5 from the oil passage 6. When the engine oil fills the chamber 20, hydraulic pressure of the oil forces the plunger 3 in a protruding direction. As the plunger 3 starts to move in the protruding direction away from the engaging state of the rack teeth 3b of the plunger 3 with the roller 72, shown in Figure 6, the roller 72 starts to travel in the direction marked by the arrow, which is against the force of the spring 73 through the engagement of the roller 72 with the rack teeth 3b along the inclined surface 71a of the supporting block 70. In Figures 6 through 11, a dot is marked on the rack teeth 3b of the plunger 3 for the purpose of visualizing the movement of the plunger 3. As the roller 72 moves, shown in Figure 7, the roller 72 starts to ride on the rack teeth 3b of the plunger 3. When the roller 72 travels further, in accordance with the movement of the plunger 3, as shown in Figure 8, the roller 72 rides on the tip of the rack teeth 3b of the plunger 3. At this time, a clearance Bm between the roller 72 and the stop surface 71b of the supporting block 70 is the maximum backlash of the ratchet mechanism 7. During operation of the tensioner, the roller 72 travels within the range of the maximum backlash Bm.

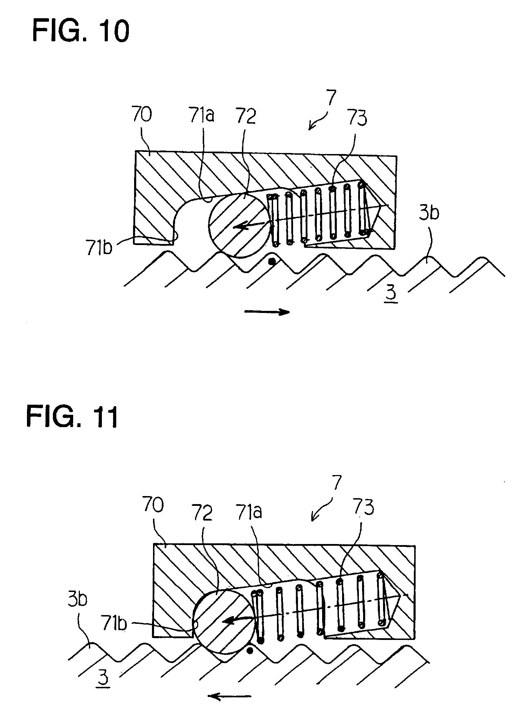

When the plunger 3 travels further in the protruding direction from the state shown in Figure 8, the rack teeth 3b of the plunger 3 pass over the roller 72, as shown in Figure 9. The roller 72 then begins to travel in a reverse direction or in the direction marked by the arrow in Figure 9 along the inclined surface 71a of the supporting block 70 by an elastic force of the spring 73. Thereafter, shown in Figure 10, the roller 72 stops traveling when the roller 72 engages the rack teeth 3b of the plunger 3. Additionally, in the case of further movement of the plunger 3 in the protruding direction, the action shown in Figures 7 to 10 is conducted repeatedly.

When tension in the chain increases and a compressive force acts upon the distal end portion 3c of the plunger 3, the ball check valve 6 closes and hydraulic pressure in the chamber 20 is imparted upon the plunger 3 as a resistant force, thereby preventing the backward movement of the plunger 3.

At the time of backward movement of the plunger 3, shown in Figure 11, the roller 72 travels in the backward direction of the plunger 3 along the inclined surface 71a of the supporting block 70 through engagement between the rack teeth 3b of the plunger 3 and the roller 72. Thus, the roller 72 develops a "wedge-effect" between the plunger 3 and the inclined surface 71a of the roller housing portion 71 of the supporting block 70, thereby securely preventing the rearward movement of the plunger 3.

During the operation of the tensioner 1, since the roller 72 travels along the inclined slide surface 71a of the supporting block 70, the roller 72 travels within the range of the maximum backlash Bm, which is greater than a backlash between the roller 72 and the rack teeth 3b. Thereby, the amount of the backlash of the whole ratchet mechanism may be increased and adequate backlash can be secured.

In the case of inadequate fluid pressure in the chamber 20, such as at the engine start, when a compressive force is applied to the distal end portion 3c of the plunger 3 from the chain, the roller 72 develops the "wedge-effect" between the plunger 3 and the inclined surface 71a of the roller housing portion 71 of the supporting block 70 and the roller 72 contacts the stop surface 71b of the supporting block 70, as shown in Figure 11. Thereby, movement of the roller 72 is prevented and the retraction of the plunger 3 may be securely prevented.

Then, in the case of the retracted state of the plunger 3, when the plunger 3 is disengaged from the roller 72, such as at the time of transportation or installation of the tensioner, as shown in Figure 4, a disengaging pin 10 is inserted into the first through hole 25 formed in the housing 2. Thus, the roller 72 and the stop surface 71b of the roller housing portion 71 are separated, and the engagement between the roller 72 and the rack teeth 3b of the plunger 3 is disengaged. From this condition the plunger 3 may easily be placed in a retracted state by pushing the plunger 3 into the housing. Then, with the distal end portion 3c of the plunger 3 pressed so as not to protrude the plunger 3, the disengaging pin 10 is extracted from the first through hole 25 and the retaining pin 11 is inserted into the second through hole 26 formed in the housing, as shown in Figure 5. Thereby, the roller 72 and the rack teeth 3b of the plunger 3 are re-engaged, and the pin 11 engages the teeth 3b thus maintaining the retracted state of the plunger 3. After the tensioner is fitted to the chain, the tensioner is placed in an operatable condition by extracting the retaining pin 11 from the second through hole 26.

According to the present invention, the rack teeth 3b are formed around the outer circumference of the plunger 3, thus eliminating the necessity for providing a rack member aside from the plunger 3, which reduces the number of components. Also, since the roller 72 travels along the inclined slide surface 71a of the roller housing portion 71a, a sufficient backlash for the whole ratchet mechanism may be acquired. Moreover, since the wedge-shaped roller 72 develops a "wedge-effect" between the inclined surface 71a and the plunger 3 at the time of retraction of the plunger 3, the retraction of the plunger 3 may be securely prevented.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A hydraulic tensioner for applying tension to a chain comprising:
a housing having a bore that opens at one end thereof;
a hollow plunger slidably received in the bore having an inner space forming a fluid chamber with the bore, the plunger having rack teeth formed at least at a portion of an outer circumferential surface thereof;
a first biasing member biasing the plunger in a protruding direction;
a roller housing portion in a supporting block of the housing having an inclined roller surface located opposite the rack teeth of the plunger in a direction crossing an axial centerline of the plunger;
a roller within the roller housing portion, movable along the inclined surface of the roller housing portion to prevent travel of the plunger in a backward direction by a wedge-effect; and
a second biasing member in the roller housing portion biasing the roller in a direction of engagement of the roller with the rack teeth of the plunger;
such that the second biasing member biases the roller in such a way that the roller moves along the inclined roller surface of the roller housing portion of the supporting block.

2. The hydraulic tensioner according to claim 1, wherein the second biasing member is a coil spring and an axial centerline of the coil spring is disposed parallel to the inclined roller surface of the roller housing portion.

3. The hydraulic tensioner according to claim 1 or 2, wherein the roller housing portion has a rear stop surface adapted to contact the roller to block travel of the roller in a backward direction.

4. The hydraulic tensioner according to claim 1, 2 or 3, wherein the roller housing portion 'has a front end wall, and one end of the second biasing member contacts the front end wall of the roller housing portion and the other end of the second biasing member contacts the roller.

5. The hydraulic tensioner according to claim 3 or claims 3 and 4, wherein the housing has a first through hole adapted to insert a disengaging pin thereinto between the roller and the rear stop surface of the roller housing portion to disengage engagement of the roller with the rack teeth of the plunger, and the housing has a second through hole adapted to insert a retaining pin thereinto to retain the plunger in a retracted state.

6. The hydraulic tensioner according to claim 5, wherein the disengaging pin and the retaining pin are the same pin having a tapered distal end.

7. The hydraulic tensioner according to any one of claims 1 to 6, further comprising a check valve provided at a bottom portion of the central bore of the housing, the check valve being adapted to permit the fluid flow into the chamber but to block reverse flow of fluid.
